**Europäisches Patentamt**

**European Patent Office**

**Office européen des brevets**

(11) Numéro de publication : **0 497 696 A1**

(19)

(12) # DEMANDE DE BREVET EUROPEEN

(21) Numéro de dépôt : **92400234.8**

(22) Date de dépôt : **29.01.92**

(51) Int. Cl.$^5$ : **G01J 9/02**

(30) Priorité : **01.02.91 FR 9101174**

(43) Date de publication de la demande :
**05.08.92 Bulletin 92/32**

(84) Etats contractants désignés :
**BE DE ES GB IT NL SE**

(71) Demandeur : **PHOTONETICS**
**52 Avenue de l'Europe**
**F-78160 Marly le Roi (FR)**

(72) Inventeur : **Lefevre, Hervé**
**19, rue des Cordelières**
**F-75013 Paris (FR)**
Inventeur : **Martin, Philippe**
**5 Clos Blaise Cendrars**
**F-78760 Pontchartrain (FR)**
Inventeur : **Desforges, François-Xavier**
**7 Square Palissy**
**F-78330 Fontenay le Fleury (FR)**

(74) Mandataire : **Phélip, Bruno et al**
**c/o Cabinet Harlé & Phélip 21, rue de La**
**Rochefoucauld**
**F-75009 Paris (FR)**

(54) **Dispositif de mesure d'un déphasage dans un interféromètre.**

(57)     L'invention concerne un dispositif de mesure du type dans lequel la variation d'un paramètre mesuré engendre un déphasage entre deux ondes dans un interféromètre (2).

Des moyens électroniques (7) comportent un système de traitement (9) fournissant un signal fonction du paramètre mesuré et des moyens électroniques (12) commandant le modulateur de phase (4).

Les moyens électroniques (12) comportent un signal de commande du modulateur déterminé de telle sorte que le déphasage $\Phi_m$ qu'il produit entre les ondes prenne périodiquement les quatre valeurs suivantes :

$$\Phi_1 = \Phi_o$$
$$\Phi_2 = -\Phi_o$$
$$\Phi_3 = a\Phi_o$$
$$\Phi4 = - a\Phi_o$$

où $\Phi_o$ est un déphasage constant et dépendant de a, a une constante positive satisfaisant la condition :

$$\cos\Phi_o = \cos a\Phi_o$$

On maintient constant le gain de la chaîne de commande de la modulation en produisant un signal fonction dudit gain en exploitant les quatre valeurs x1, x2, x3, x4 fournis en réponse à une période du signal de modulation selon la formule (x1 + x3) - (x2 + x4) , ledit signal agissant sur le modulateur de façon à maintenir le gain constant.

FIG.2

L'invention concerne un dispositif de mesure du déphasage $\Phi_p$ introduit dans un interféromètre.

Les interféromètres sont utilisés pour permettre la mesure de nombreux paramètres. Les paramètres mesurés introduisent, éventuellement par l'intermédiaire de différents capteurs, un déphasage $\Phi_p$ entre deux ondes qui sont ensuite recombinées pour produire des interférences.

Un détecteur reçoit le flux lumineux sortant de l'interféromètre et génère un signal électrique fonction de l'état d'interférence et donc du déphasage $\Phi_p$.

Les interféromètres ainsi mis en oeuvre sont par exemple des interféromètres de Michelson ou des interféromètres de Mach-Zehnder. La plupart des interféromètres classiques ont maintenant leur équivalent réalisé avec des fibres optiques, le plus souvent monomodes.

Différents perfectionnements ont été apportés à ces dispositifs afin d'améliorer la précision de la mesure. En particulier il est connu d'introduire dans un tel interféromètre un modulateur de phase, par exemple un modulateur piezo-électrique ou bien électro-optique qui introduit entre les ondes un déphasage de contre-réaction $\Phi_{cr}$ qui s'ajoute au déphasage mesuré $\Phi_p$.

Il a également été prévu d'asservir la somme $\Phi_{cr} + \Phi_p$ à une valeur constante ce qui permet d'améliorer la précision de la mesure.

L'asservissement de cette somme $\Phi_{cr} + \Phi_p$ à 0 permet de linéariser la réponse du système ce qui constitue une étape supplémentaire dans la recherche de la précision. En effet la nouvelle mesure devient $\Phi_{cr}$ qui est opposé à $\Phi_p$, et a donc une dépendance linéaire.

Il est également connu d'ajouter au déphasage de contre réaction $\Phi_{cr}$ un déphasage périodique $\Phi_m$ (ou modulation de discrimination) produit par un signal de modulation également appelé $\Phi_m$.

Le but de la présente invention est d'améliorer encore la sensibilité et la précision de la mesure du déphasage réalisé dans un interféromètre par un traitement adapté du signal électrique généré par le détecteur et du signal de commande du modulateur de phase.

Selon l'invention, le signal de modulation $\Phi_m$ est périodique, de période $4\tau$. Pendant chaque période, il prend successivement les quatre valeurs suivantes :

$$\Phi_1 = \Phi_o$$
$$\Phi_2 = a\Phi_o$$
$$\Phi_3 = -\Phi_o$$
$$\Phi_4 = -a\Phi_o$$

chacune pendant une durée $\tau$. $\Phi_0$ est un déphasage constant et dépendant de a, a est une contante positive satisfaisant la condition :

$$\cos\Phi_o = \cos(a\Phi_o)$$

Le système de traitement exploite le signal d'interférence revenant de l'interféromètre. Ce signal prend périodiquement quatre valeurs x1, x2, x3, x4 correspondant respectivement aux niveaux de modulation $\Phi_1$, $\Phi_2$, $\Phi_3$ et $\Phi_4$.

Le résultat de t'opération (x1 + x3) - (x2 + x4) donne un signal Xg qui est significatif du gain de la chaîne de commande de modulation. En particulier Xg = 0 quand la condition $\cos \Phi_o = \cos (a \Phi_o)$ est respectée. Ce signal Xg sert de signal d'erreur pour une boucle d'asservissement du gain de la chaîne de commande de modulation.

De préférence l'opération (x1 + x4) - (x2 + x3) conduit à un signal Xp dépendant du déphasage $\Phi_p$ à mesurer dans l'interféromètre. Le signal Xp peut alors servir de signal d'erreur pour asservir le déphasage total de l'interféromètre à zéro en compensant le déphasage $\Phi_p$ avec un déphasage opposé $\Phi_{cr}$. Ce déphasage $\Phi_{cr}$ étant généré à travers la même chaîne de commande que la modulation $\Phi_m$, l'asservissement de cette chaîne avec le signal Xg permet donc d'avoir une mesure stable et contrôlée de $\Phi_{cr}$, et donc finalement de $\Phi_p$ qui lui est opposé que l'on cherche à mesurer. Xg est donc indépendant du déphasage $\Phi_p$ alors qu'il est significatif du gain de la chaîne de commande de modulation.

Ces moyens électroniques sont de préférence numériques et comportent un convertisseur analogique-numérique destiné à numériser le signal généré par le détecteur, un système à traitement numérique exploitant le signal fourni par le convertisseur analogique-numérique, un filtre numérique de boucle d'asservissement alimenté par le signal sortant du système de traitement numérique et fournissant un signal représentatif du paramètre mesuré, un registre recevant le signal sortant du filtre numérique de boucle d'asservissement et fournissant un signal fonction du paramètre mesuré pour tout usage externe souhaité, un générateur de modulation produisant un signal de modulation, un additionneur comportant deux entrées et une sortie, sa première entrée étant alimentée par le signal fonction du paramètre mesuré produit par le registre, sa deuxième entrée étant alimentée par le signal de modulation, un convertisseur numérique-analogique alimenté par le signal de sortie de l'additionneur et commandant le modulateur de phase.

L'invention sera décrite en détail en référence aux dessins dans lesquels :

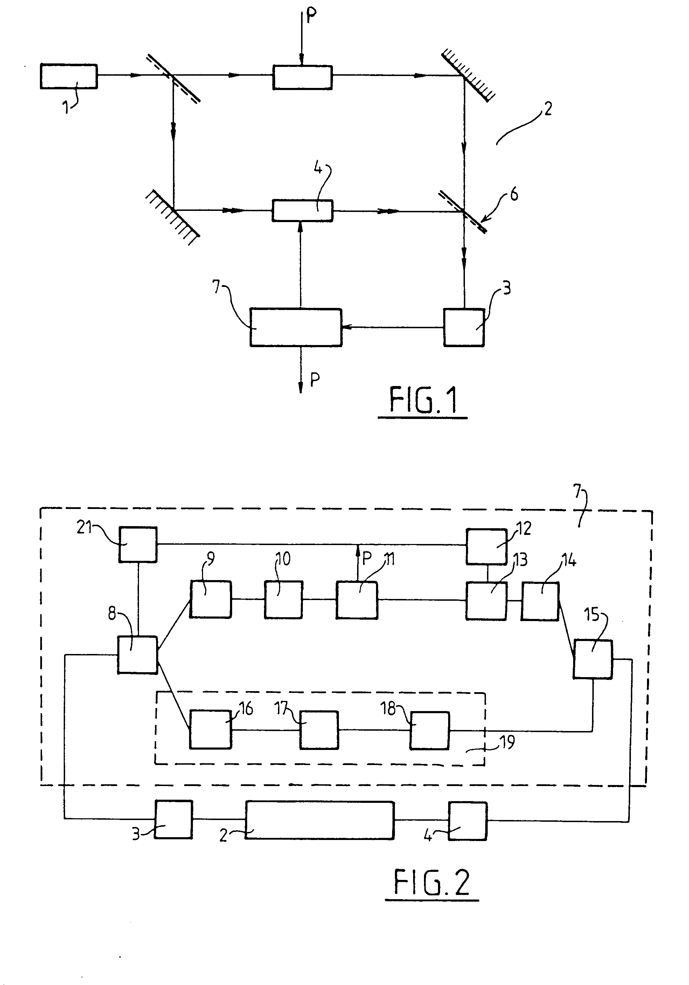

. La figure 1 est une représentation générale du dispositif de mesure de l'invention.

. La figure 2 est un schéma fonctionnel représentant le traitement du signal.

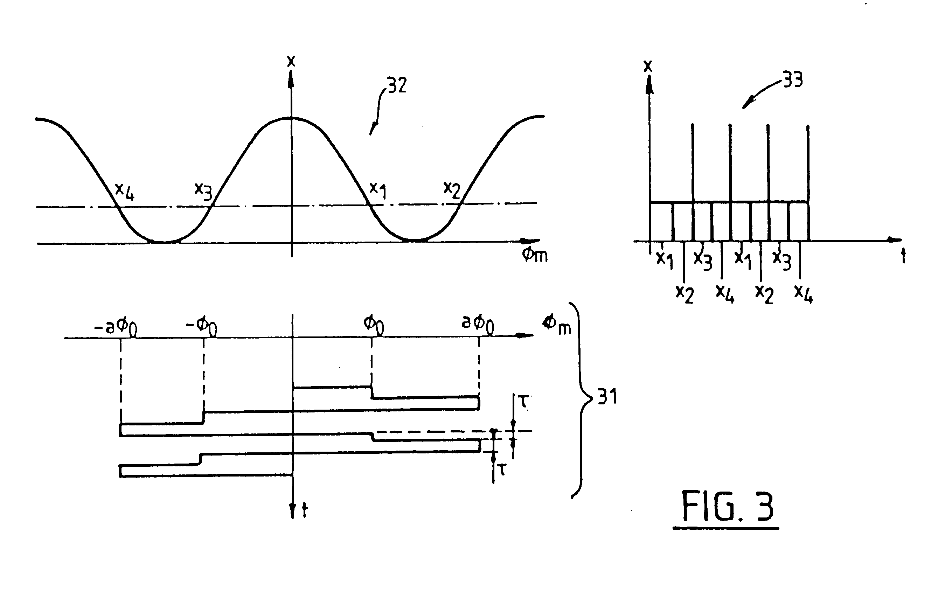

. La figure 3 représente le déphasage dans l'interféromètre et le signal correspondant produit par le détecteur en l'absence de variation du paramètre mesuré pour le signal de modulation.

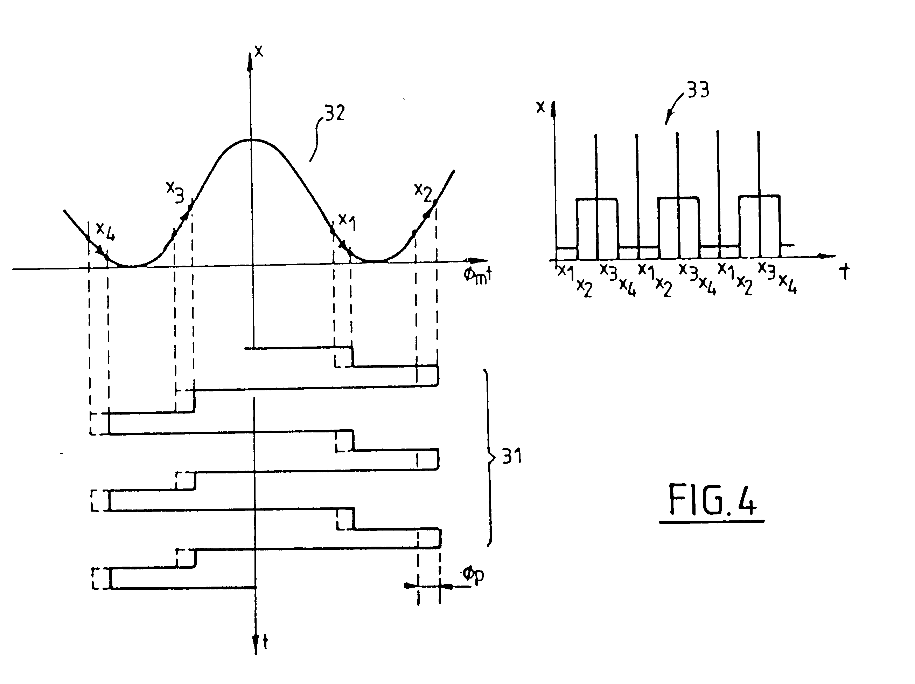

. La figure 4 représente le déphasage dans l'interféromètre et le signal correspondant produit par le détecteur lors d'une variation du déphasage mesuré avec le signal de modulation.

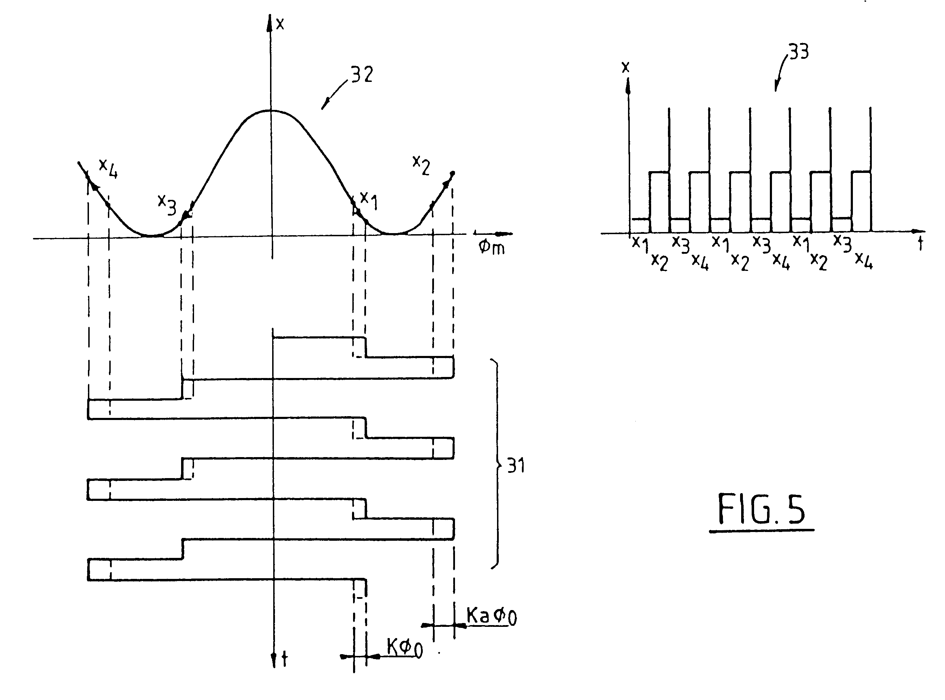

. La figure 5 représente le déphasage dans l'interféromètre et le signal produit par le détecteur lors d'une variation du gain de la chaîne de commande de la modulation, avec le signal de modulation.

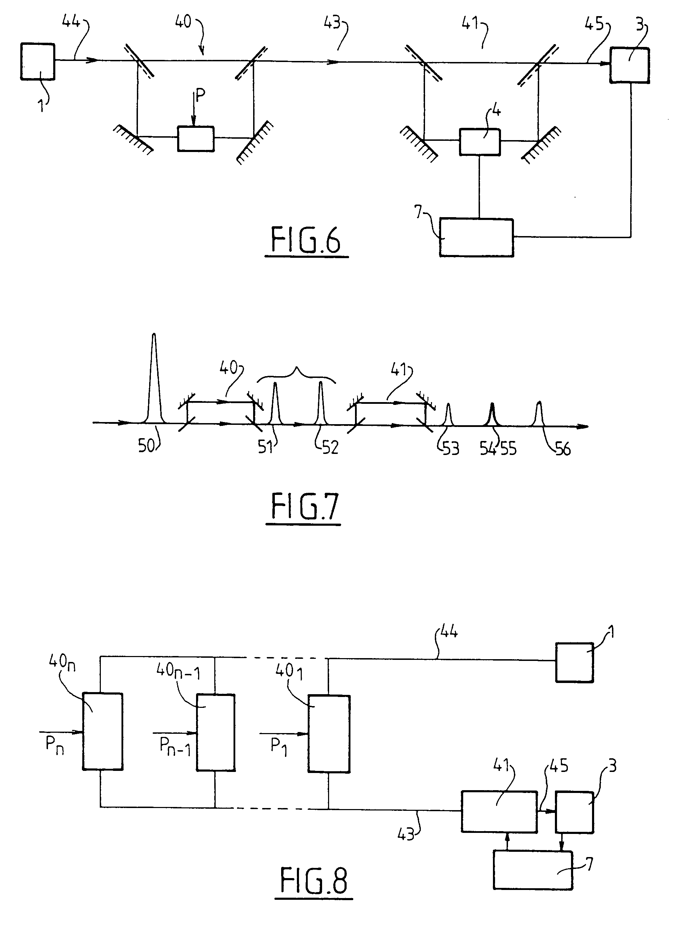

. La figure 6 représente la mise en oeuvre de l'invention avec un dispositif d'interférométrie en lumière blanche.

. La figure 7 représente le fonctionnement d'un interféromètre en lumière blanche avec une source pulsée.

. La figure 8 représente la mise en oeuvre de l'invention dans un réseau d'interféromètres, avec un multiplexage temporel.

Le dispositif de mesure de l'invention comporte une source lumineuse 1 qui est le plus souvent un laser ou une diode super luminescente et un interféromètre globalement désigné par la référence 2.

Cet interféromètre 2 peut être par exemple un interféromètre de Michelson, un interféromètre de Mach-Zehnder, mais le dispositif décrit peut être utilisé avec de nombreux autres interféromètres.

Ce dispositif de mesure comporte également un détecteur 3 fournissant un signal fonction de l'état d'interférence des ondes à la sortie de l'interféromètre lui-même.

Le signal optique est fourni au détecteur 3 par l'intermédiaire d'une lame 6 par exemple constitué d'une lame semi transparente ou d'un coupleur à fibre optique qui recombine les deux chemins de l'interféromètre pour créer les interférences lumineuses.

Sur l'un des bras de l'interféromètre est interposé un modulateur 4, qui commandé à partir d'un signal électrique, est susceptible d'introduire un déphasage $\Phi$ de l'onde qui le traverse et donc une différence de phase $\delta\Phi$ égale à ce déphasage, entre les deux ondes. Des moyens électroniques 7 commandent en contre-réaction le modulateur de phase 4 en fonction du signal reçu du détecteur 3.

Le déphasage $\Phi$ est la superposition d'un déphasage de modulation, périodique, $\Phi_m$ et d'un déphasage de contre réaction $\Phi_{cr}$. Par ailleurs, les variations du paramètre p introduisent un déphasage $\Phi_p$.

Ces moyens électroniques 7 sont configurés de telle sorte que la variation du signal d'erreur démodulé en fonction du déphasage $\Phi_{cr} + \Phi_p$ produit entre les deux ondes au voisinage du zéro soit approximativement linéaire. Cette disposition permet d'obtenir une très bonne sensibilité de la variation du signal d'erreur démodulé au voisinage du zéro du déphasage $\Phi_{cr} + \Phi_p$ alors qu'il est aisément compréhensible que lorsque la dépendance du signal par rapport au déphasage $\Phi_{cr} + \Phi_p$ est de forme cosinusoïdale la sensibilité au voisinage du zéro du déphasage $\Phi_{cr} + \Phi_p$ est très faible.

De plus, ces moyens électroniques 7 comportent des moyens 19 qui ont pour fonction de stabiliser le gain de la chaîne de commande du modulateur. C'est-à-dire que ce gain est asservi afin que pour un paramètre à calibrer, la modulation de discrimination $\Phi_m$ aient quatre états $\Phi_o$, $a\Phi_o$, $-\Phi_o$ et $-a\Phi_o$ qui respectent $\cos\Phi_o = \cos -\Phi_o = \cos a\Phi_o = \cos -a\Phi_o$.

Ainsi si $a=2$ $\Phi_0=2\pi/3$, si $a = 3$ $\Phi_O = \pi/2$ d'autre part, ces moyens électroniques 7 ont pour fonction de maintenir le déphasage $\Phi_{cr} + \Phi_p$ nul. C'est-à-dire que lorsque la variation du paramètre mesuré introduit un déphasage $\Phi_p$ entre les deux ondes dans l'interféromètre, ce déphasage $\Phi_p$ produit une variation du signal émis par le détecteur 3 entraînant par l'intermédiaire des moyens électroniques 7 et du modulateur de phase 4 une action $\Phi_{cr}$ égale et de sens inverse au déphasage initialement produit, de telle sorte que, le déphasage global $\Phi_p + \Phi_{cr}$ est ramené à la valeur nulle. La première boucle asservissant le gain de la chaîne de commande de la modulation, la mesure du déphasage de contre-réaction $\Phi_{cr}$ est alors très précise.

Enfin, ces moyens électroniques 7 fournissent par exploitation du signal de commande du modulateur de phase 4 un signal fonction de la variation du paramètre mesuré.

De préférence, les moyens électroniques 7 comportent un convertisseur analogique-numérique 8 destiné à numériser le signal émis par le détecteur 3.

La dynamique du convertisseur analogique-numérique 8 peut être relativement faible par rapport à la dynamique de mesure de l'ensemble. Cette dynamique se détermine à partir de la définition de la limite basse et de la limite haute.

La limite basse est déterminée de telle sorte que la valeur analogique correspondant au bit de poids faible ait une valeur inférieure ou égale à l'écart type du bruit du signal venant du détecteur. Cette condition évite une zone aveugle correspondant au bit de poids faible, et rend négligeable le bruit d'échantillonnage par rapport au bruit initial du signal analogique, et de plus, un filtrage numérique additionnel conduit dans ce cas à la même amélioration du rapport signal à bruit qu'en analogique. Selon un exemple pratique, la période d'échantillonnage $\tau$ est de l'ordre de $0,5\mu s$. La période du déphasage de modulation est $4\tau$. Le critère de Shannon impose donc une bande passante importante au signal à échantilloner : il faut qu'elle soit égale à $1/2\tau$ soit $1MHz$ dans cet exemple. Dans une telle bande passante le bruit est relativement important : typiquement un écart-type de $10^{-3}$ de la puissance retour au biais ce qui correspond à environ un déphasage de $10^{-3}$ radian dans l'interféromètre. Il est donc suffisant que le bit de poids faible corresponde à ce déphasage pour ne pas perdre de sensibilité et pour pouvoir ensuite par filtrage numérique améliorer le rapport signal à bruit.

La limite haute, quant à elle, doit être au moins supérieure à la valeur pic à pic du bruit soit environ 8 fois son écart-type et donc 3 bits suffiraient pour l'échantillonnage du bruit seul. Cependant, il faut aussi tenir compte de la dynamique propre du signal : en boucle fermée celui-ci est asservi à zéro et ne réclamerait donc pas a priori de dynamique mais, en pratique, l'asservissement s'écarte de zéro lors de variations brusques du paramètre à mesurer et la dynamique du convertisseur doit pouvoir supporter ces écarts. Ces variations définissent donc le nombre de bits nécessaires. En pratique 8 à 12 bits suffisent au niveau du convertisseur alors qu'après filtrage numérique la dynamique du paramètre mesuré peut être supérieure à 20 bits.

L'horloge 21 pilote l'ensemble des composants.

Un système à traitement numérique 9 exploite le signal fourni par le convertisseur analogique-numérique 8. Il est suivi d'un filtre numérique de boucle d'asservissement 10 alimenté par le signal sortant du système de traitement numérique et fournissant un signal représentatif du paramètre mesuré.

Un registre 11 reçoit le signal sortant du filtre numérique de boucle d'asservissement et fournit un signal fonction du paramètre mesuré utilisable pour tout usage externe souhaité.

Un générateur de modulation 12 produit un signal de modulation. L'additionneur 13 comporte deux entrées et une sortie. Sa première entrée est alimentée par un signal fonction du paramètre mesuré produit par le registre 11, sa deuxième entrée est alimentée par le signal de modulation produit par le générateur 12.

Un convertisseur numérique-analogique 14 alimenté par le signal de sortie de l'additionneur 13 commande le modulateur de phase 4 par l'intermédiaire de l'amplificateur de gain 15. Le signal de modulation produit par le générateur 12 assure le fonctionnement du système de mise au biais c'est-à-dire une dépendance approximativement linéaire entre le déphasage introduit entre les deux ondes circulant dans l'interféromètre et le signal produit dans le détecteur 3. A cet effet, le signal de modulation $\Phi_m$ est déterminé de telle sorte que la modulation du déphasage $\Phi_m$ qu'il produit entre les ondes prenne périodiquement les quatre valeurs suivantes :

$$\Phi_1 = \Phi_o$$
$$\Phi_2 = a\Phi_o$$
$$\Phi_3 = -\Phi_o$$
$$\Phi_4 = -a\Phi_o$$

où $\Phi_o$ est un déphasage constant et dépendant de a, a est une contante positive satisfaisant la condition :

$$\cos\Phi_o = \cos(a\Phi_o)$$

Le système de traitement exploite le signal d'interférence revenant de l'interféromètre. Ce signal prend périodiquement quatre valeurs x1, x2, x3, x4 correspondant respectivement aux niveaux de modulation $\Phi_1$, $\Phi_2$, $\Phi_3$ et $\Phi_4$.

D'une part des moyens électroniques 16 effectuent l'opération (x1 + x3) - (x2 + x4) afin de produire un signal Xg qui est indépendant du déphasage $\Phi_p$ mais est par contre significatif du gain de la chaîne de commande de modulation. En particulier, Xg = 0 quand la condition $\cos\Phi_o = \cos(a\Phi_o)$ est respectée. Ce signal Xg peut donc servir de signal d'erreur pour une boucle d'asservissement du gain de la chaîne de commande de modulation.

Le signal Xp peut alors servir de signal d'erreur pour asservir le déphasage total de l'interféromètre à zéro en compensant le déphasage non-réciproque $\Phi_p$ avec un déphasage opposé $\Phi_{cr}$. Ce déphasage $\Phi_{cr}$ étant généré à travers la même chaîne de commande que la modulation $\Phi_m$, l'asservissement de cette chaîne avec le signal Xg permet donc d'avoir une mesure stable et contrôlée de $\Phi_{cr}$, et donc finalement de $\Phi_p$ qui lui est opposé et qui est le paramètre que l'on cherche à mesurer. Les moyens électroniques 9 effectuent l'opération (x1 + x4) - (x2 + x3) pour produire un signal Xp dépendant du déphasage non-réciproque $\Phi_p$ à mesurer dans l'interféromètre.

La figure 3 représente un mode de réalisation préféré du signal de modulation $\Phi_m$ dans le cas où le paramètre p produit un déphasage $\Phi_p$ = 0 ou bien quand ce déphasage $\Phi_p$ est compensé par le déphasage de contre-réaction $\Phi_{cr}$ de façon que $\Phi_p + \Phi_{cr}$ = 0 le déphasage ainsi engendré par $\Phi_m$ entre les ondes de l'interféromètre, et le signal correspondant fourni par le détecteur 3. Les notations utilisées sur l'ensemble des figures correspondent à celles déjà indiquées. De plus -t- représente le temps.

La réponse de l'interféromètre constituée par le signal fourni par le détecteur 3 en fonction du déphasage $\Phi_p + \Phi_{cr}$ entre les ondes est représenté en 32. Le signal fourni par le détecteur 3 en réponse au déphasage représenté en 31 est donc ainsi représenté en 33. Les valeurs du signal x1, x2, x3, x4 correspondent respectivement aux différences de phase $\Phi_1$, $\Phi_2$, $\Phi_3$, $\Phi_4$ établies entre les ondes.

La variation du paramètre p, supposée lente par rapport à la période du déphasage de modulation $\Phi_m$ engendre l'addition d'un déphasage supposé constant $\Phi_p$ au signal de modulation. Son effet, est représenté sur la figure 4 : $\Phi_p$ engendre une variation de même sens pour x1 et x4 d'une part et pour x2 et x3 d'autre part, chacune de ces variations étant de signes opposés. Ainsi, le système à traitement numérique 9 produit un signal fonction du paramètre mesuré en exploitant les quatre signaux respectifs fournis en réponse à une période du signal de modulation selon la formule (x1 + x4) - (x2 + x3).

De plus, un tel signal de modulation $\Phi_m$ permet de maintenir constant avec des moyens 19, simples le gain de la chaîne de commande de la modulation.

Sur la figure 5 on a représenté l'effet d'une variation d'un facteur (1 + K) du gain de la chaîne de commande de la modulation. En pratique cette variation peut être engendrée par une modification de l'environnement et donc des conditions de fonctionnement du modulateur de phase 4 ou de l'amplificateur de gain 15 ou de la tension analogique de référence du convertisseur 14. Le déphasage $\Phi_m$ introduit entre les ondes de l'interféromètre subit alors une homothétie par exemple de valeur (1 + K). Cette homothétie produit des variations de même sens d'une part de x1 et x3 et d'autre part de x2 et x4, chacun de ces groupes variant dans un sens opposé. Une unité de traitement 16 exploite les quatre signaux successifs de manière à fournir un signal selon la formule (x1 + x3) - (x2 + x4) qui est fonction du gain de la chaîne de commande de la modulation. Ce signal est filtré par un filtre intégrateur numérique de bouche d'asservissement 17 puis alimente un convertisseur numérique-analogique 18 qui commande le gain de l'amplificateur de gain 15 ou bien de la tension analogique de référence du convertisseur 14. Ainsi, le gain de la chaîne de commande de la modulation est maintenu constant entre la valeur numérique du signal et la modulation de phase effectivement appliquée. Les signaux commandant le modulateur de phase en fonction du signal reçu par le détecteur d'une part, et ceux destinés à maintenir constant le gain de la chaîne de commande de la modulation, d'autre part sont multipliés, l'un avec l'autre.

De préférence, le signal de modulation a une période égale à $4\tau$ et, chaque période est composé de quatre éléments de durée $\tau$, d'amplitudes respectives $\Phi_0$, $a\Phi_0$, $- \Phi_0$, $- a\Phi_0$. Le signal de contre réaction est obtenu à partir du registre numérique 11 de stockage de la valeur du paramètre mesuré.

Le dispositif de l'invention est particulièrement bien adapté à la mesure de déphasage engendrée dans des interféromètres de Michelson ou des interféromètres de Mach-Zehnder. Le modulateur de phase peut alors être réalisé à partir d'un barreau de Niobate de Lithium ou par vibration d'un miroir monté sur un élément piezo-électrique.

Cet interféromètre peut également être un polarimètre ou interféromètre à polarisation dans lequel le flux lumineux émis par la source est séparé en deux faisceaux de polarisations orthogonales. Le paramètre p agit sur la biréfringence et donc sur la différence de phase entre ces faisceaux et un modulateur de biréfringence, en lui-même connu, fondé par exemple sur l'effet Pockels dans un barreau de Niobate de Lithium constitue le modulateur de phase.

Le dispositif de mesure de l'invention peut également être utilisé dans un procédé d'interférométrie en lumière blanche. Selon un tel procédé la source lumineuse 1 est une source à large spectre, un déphasage introduit dans un premier interféromètre 40 produit un codage spectral du flux lumineux, la lecture de ce codage est réalisée par un deuxième interféromètre 41 éventuellement distant du premier qui introduit une modulation de discrimination $\Phi_m'$ et un déphasage de contre-réaction opposé au déphasage du premier interféromètre. La valeur du déphasage de contre-réaction introduit dans le deuxième interféromètre est représentatif de la valeur du paramètre p mesuré dans le premier interféromètre.

Le procédé de mesure par interférométrie en lumière blanche fonctionne avantageusement avec une source pulsée. Son fonctionnement est décrit en référence à la figure 7.

Une impulsion d'entrée 50 produit, après traversée du premier interféromètre 40 deux impulsions 51 et 52 décalées, dans le temps, l'une par rapport à l'autre d'une durée dépendant du déphasage $\Phi_p$ introduit par l'interféromètre entre ces deux chemins.

De manière analogue chacune des impulsions 51 et 52 se dédouble lors de la traversée du deuxième interféromètre 41 produisant deux impulsions respectivement 53, 54 et 55, 56.

Le décalage entre les impulsions 53 et 54 issues de l'impulsion 51 est une fonction dépendant de la différence de phase $\Phi_{cr}$ introduit par l'interféromètre 41. Il en est de même entre les impulsions 55 et 56.

Lorsque $\Phi_p + \Phi_{cr} = 0$ les impulsions 54 et 55 se recouvrent telles que représentées sur la figure 7. Ce recouvrement est détecté.

Selon l'invention, un modulateur de phase 4 introduit un déphasage $\Phi_m$ dans l'un des interféromètres. Le signal de commande de ce modulateur est déterminé de telle sorte que le déphasage $\Phi_m$ qu'il produit prenne périodiquement les quatre valeurs successives suivantes :

$$\Phi_1 = \Phi_o$$
$$\Phi_2 = a\Phi_o$$
$$\Phi_3 = - \Phi_o$$
$$\Phi_4 = - a\Phi_o$$

où $\Phi_o$ est un déphasage constant et dépendant de a. a est une constante positive fixée satisfaisant la condition

$$\cos \Phi = \cos a\Phi_o.$$

De plus le système de traitement 19 maintient constant le gain de la chaîne de commande de modulation. Ce signal agit sur la chaîne de modulation de façon à maintenir le gain constant en exploitant les quatre valeurs x1, x2, x3, x4 fournies en réponse à une période du signal de modulation selon la formule (x1 + x3) - (x2 + x4).

Il est également connu que les rôles respectifs des premier et deuxième interféromètres 40, 41 peuvent être interchangés. Les interféromètres 40, 41 sont de préférence des interféromètres à fibres optiques. Ils peuvent être reliés entre eux par une fibre 43 et leurs liaisons aussi bien avec la source qu'avec le détecteur peuvent être réalisées avec des fibres (44, 45).

Lors de la mise en oeuvre du dispositif de l'invention dans un procédé de mesure interférométrique en lumière blanche le modulateur de phase peut être placé dans l'un ou l'autre des interféromètres.

L'interférométrie en lumière blanche permet la réalisation de réseaux de capteurs avec un multiplexage temporel. Un seul interféromètre 41 de lecture peut alors être utilisé pour interroger et décoder plusieurs interféromètres de mesure $40_n$, sensibles respectivement aux paramètres $p_n$.

Dans ce cas une impulsion unique d'entrée 50 fournit autant de couples d'impulsion $51_n$ et $52_n$ qu'il y a d'interféromètre $41_n$.

La mesure, de l'instant d'arrivée de ces deux impulsions permet de reconnaître l'interféromètre qui les a généré et la mesure de leur déphasage relatif, par l'interféromètre de lecture 41 permet d'accéder à la mesure du paramètre $p_n$ correspondant.

Un tel dispositif ne nécessite donc qu'un seul interféromètre de lecture 41, un seul ensemble de moyens électroniques 7 et un seul récepteur 8.

## Revendications

1. Dispositif de mesure du déphasage $\Phi_p$ introduit dans un interféromètre (2) à deux chemins optiques, ledit interféromètre étant couplé à une source (1) et produisant un signal reçu par un récepteur (3), dans lequel un modulateur de phase (4) introduit un déphasage $\Phi_m$ sur l'un des deux chemins optiques de l'interféromètre, le signal reçu du détecteur étant traité par des moyens électroniques (7) comportant un système de traitement fournissant un signal fonction du déphasage $\Phi_p$ et des moyens électroniques numériques (12) commandant le modulateur de phase (4) caractérisé en ce que les moyens électroniques (12) produisent un signal de commande du modulateur déterminé de telle sorte que le déphasage $\Phi_m$ qu'il produit sur l'une des deux ondes prenne périodiquement les quatre valeurs successives suivantes :

$\Phi_1 = \Phi_o$
$\Phi_2 = a\Phi_o$
$\Phi_3 = - \Phi_o$
$\Phi_4 = - a\Phi_o$

où $\Phi_o$ est un déphasage constant et dépendant de a, a est une constante positive fixée satisfaisant la condition :

$$\cos\Phi_o = \cos a\Phi_o$$

et qu'il comporte un système de traitement (19) de maintien constant du gain de la chaîne de commande de la modulation produisant un signal fonction dudit gain en exploitant les quatre valeurs x1, x2, x3, x4 fournies en réponse à une période du signal de modulation selon la formule (x1 + x3) - (x2 + x4), ledit signal agissant sur la chaîne de modulation de façon à maintenir le gain constant.

2. Dispositif de mesure selon la revendication 1, caractérisé en ce que le système de traitement (9) est numérique et produit un signal fonction du paramètre mesuré en exploitant les quatre valeurs x1, x2, x3, x4 fournies en réponse à une période du signal de modulation selon la formule (x1 + x4) - (x2 + x3).

3. Dispositif de mesure à selon l'une des revendications 1 ou 2 caractérisé en ce que les moyens électroniques (7) commandent en contre-réaction le modulateur de phase (4) en fonction du signal reçu du détecteur (3) de telle sorte que d'une part la variation du signal d'erreur démodulé en fonction du déphasage au voisinage du zéro soit approximativement linéaire, que d'autre part ce déphasage soit maintenu nul et fournissant par exploitation du signal de modulation (4) un signal fonction de la variation du paramètre mesuré.

4. Dispositif de mesure selon l'une quelconque des revendications 1 à 3, caractérisé en ce que lesdits moyens électroniques (7) comportent, en plus du système de traitement (9) :
   – une horloge (21) synchronisant l'ensemble des composants,
   – le convertisseur analogique-numérique (8) étant déterminé de telle sorte que la valeur analogique de son bit de poids faible ait une valeur inférieure ou égale à l'écart-type du bruit du signal venant du détecteur (3),
   – un filtre numérique de boucle d'asservissement (10), alimenté par le signal sortant du système de traitement numérique (9), fournissant un signal représentatif du paramètre mesuré,
   – un registre (11) recevant le signal sortant du filtre numérique de boucle d'asservissement et fournissant un signal fonction du paramètre mesuré pour tout usage externe souhaité,
   – un générateur de modulation (12) produisant un signal de modulation $\Phi_m$,
   – un additionneur (13) comportant deux entrées, et une sortie, sa première entrée étant alimentée par le signal fonction du paramètre mesuré produit par le registre (11), sa deuxième entrée étant alimentée par le signal de modulation,
   – un convertisseur numérique-analogique (14) alimenté par le signal de sortie de l'additionneur et commandant le modulateur de phase (4) par l'intermédiaire d'un amplificateur de gain (15).

5. Dispositif de mesure selon la revendication 4 caractérisé en ce que le système de traitement 19, de maintien constant du gain de la chaîne de commande de la modulation comporte une unité 16 exploitant quatre signaux successifs x1, x2, x3, x4 et fournissant un signal fonction de (x1 + x3) - (x2 + x4), un filtre numérique 17 intégrant le signal émis par l'unité 16, un convertisseur numérique analogique 18 convertissant le signal fourni par le filtre 17 et commandant l'amplificateur de gain 15 ou bien la tension analogique de référence du convertisseur 14.

6. Dispositif de mesure selon l'une quelconque des revendications 1 à 5 caractérisé en ce que le signal de modulation a une période égale à $4\tau$ et que, chaque période est composé de deux éléments successifs de durée $\tau$, d'amplitudes respectives $\Phi_0$ et $a\Phi_0$ suivis de deux éléments de durée $\tau$, successifs, d'amplitude respectives $-\Phi_0$ et $-a\Phi_0$.

7. Dispositif de mesure selon l'une quelconque des revendications 1 à 6 caractérisé en ce que :
   $a= 3$

8. Dispositif de mesure selon l'une quelconque des revendications 1 à 6 caractérisé en ce que :
   $a = 2$

9. Dispositif de mesure selon l'une quelconque des revendications 1 à 8 caractérisé en ce que l'interféromètre (2) est un interféromètre de Michelson.

10. Dispositif de mesure selon l'une quelconque des revendications 1 à 8 caractérisé en ce que l'interféromètre (2) est un interféromètre de Mach-Zehnder.

11. Dispositif de mesure selon l'une quelconque des revendications 1 à 8 caractérisé en ce que l'interféromètre (2) est un polarimètre.

12. Dispositif de mesure selon l'une quelconque des revendications 1 à 11 caractérisé en ce que l'interféromètre est à fibre optique monomode.

13. Dispositif de mesure selon l'une quelconque des revendications 1 à 10 caractérisé en ce que le modulateur de phase (4) est placé dans un deuxième interféromètre, la source (1) est une source de lumière blanche.

FIG.1

FIG.2

FIG. 3

EP 0 497 696 A1

FIG.4

FIG.5

FIG.6

FIG.7

FIG.8

Office européen
des brevets

# RAPPORT DE RECHERCHE EUROPEENNE

Numero de la demande

EP    92 40 0234
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 935 614 (HUBBARD)<br>* colonne 2, ligne 5 - ligne 10 *<br>* colonne 4, ligne 21 - ligne 32 *<br>* colonne 9, ligne 27 - colonne 10, ligne 5 *<br>* figure 6 * | 1,2,6-8 | G01J9/02 |
| A | --- | 4,9 | |
| Y | E. WOLF <éditeur> "Progress in Optics, XXVI"<br>Chapter V: K. CREATH: "Phase-measurement interferometry techniques"<br>1988, Elsevier, Amsterdam, NL, pages 349-393<br>* page 363 - page 367, ligne 8 * | 1,2,6-8 | |
| A | --- | 5 | |
| A | PATENT ABSTRACTS OF JAPAN<br>vol. 9, no. 16 (P-329)(1739) 23 Janvier 1985<br>& JP-A-59 164 905 ( SHINKO RIKOU ) 18 Septembre 1984<br>* le document en entier *<br>--- | 1,3,4 | |
| A | US-A-4 854 677 (MEARA)<br>* colonne 4, ligne 54 - ligne 59; figure 3 *<br>--- | 1,3 | DOMAINES TECHNIQUES RECHERCHES (Int. Cl.5) |
| A | OPTICAL ENGINEERING.<br>vol. 29, no. 12, Décembre 1990, BELLINGHAM US<br>pages 1511 - 1515;<br>O. SASAKI: 'Sinusoidal phase modulating laser diode interferometer with a feedback control system to eliminate external disturbance'<br>* page 1513, colonne de gauche, lignes 1-4 *<br>* figure 1 *<br>--- | 1,9 | G01J<br>G02F |
| | | | |

-/--

Le présent rapport a été établi pour toutes les revendications

| Lieu de la recherche | Date d'achèvement de la recherche | Examinateur |
|---|---|---|
| LA HAYE | 07 MAI 1992 | THOMAS R.M. |

Office européen
des brevets

**RAPPORT DE RECHERCHE EUROPEENNE**

Numero de la demande

EP 92 40 0234
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | APPLIED PHYSICS B. PHOTOPHYSICS AND CHEMISTRY. vol. 51, no. 6, Décembre 1990, HEIDELBERG DE pages 418 - 420; G. JOSTEN ET AL.: 'Active phase stabilization in a two-fiber interferometer' * abrégé * * page 418, colonne de droite, dernier alinéa * * page 419, colonne de droite, lignes 16-38 * * figures 1,3 * | 1,10-12 | |
| A | ELECTRONICS LETTERS. vol. 24, no. 18, Septembre 1988, ENAGE GB pages 1173 - 1175; D.J. WEBB ET AL.: 'Extended-range interferometry using a coherence-tuned, synthesized dual-wavelength technique with multimode fibre links' * figure 1 * | 1,13 | |
| A | US-A-3 699 463 (STONE) * abrégé; figures 1,2 * | 1,4 | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 07 MAI 1992 | THOMAS R.M. |